# EUROPÄISCHE PATENTSCHRIFT

(11) **EP 0 886 923 B1**
(45) Veröffentlichungstag und Bekanntmachung des Hinweises auf die Patenterteilung: **30.01.2002**
(21) Anmeldenummer: 97906161.1
(22) Anmeldetag: 05.03.1997
(51) Int. Cl.: H04H 1/00, H04L 27/26

(54) **VERFAHREN UND SYSTEM ZUR OFDM-MEHRTRÄGER-ÜBERTRAGUNG VON DIGITALEN RUNDFUNKSIGNALEN**
PROCESS AND SYSTEM FOR THE OFDM MULTI-CARRIER TRANSMISSION OF DIGITAL RADIO SIGNALS
PROCEDE ET SYSTEME POUR LA TRANSMISSION MROF A PORTEUSES MULTIPLES DE SIGNAUX RADIO NUMERIQUES

(30) Priorität: 14.03.1996 DE 19609909
(43) Veröffentlichungstag der Anmeldung: 30.12.1998
(73) Patentinhaber: Deutsche Telekom AG, 53113 Bonn (DE)
(72) Erfinder: ZIMMERMANN, Gerd, D-64331 Weiterstadt (DE); SCHULZE, Henrik, D-59872 Meschede (DE)
(86) Internationale Anmeldenummer: EP9701090
(87) Internationale Veröffentlichungsnummer: WO9734382

(56) Entgegenhaltungen:
- EP-A- 0 531 046
- EP-A- 0 540 232
- WO-A-88/00417
- DE-A- 4 240 226
- DE-A- 4 306 590

## Beschreibung

Die Erfindung betrifft ein Verfahren zur OFDM-Mehrträger-Übertragung von digitalen Rundfunksignalen, insbesondere für den digitalen Hörrundfunk und für digitale Mehrwertdienste nach Anspruch 1, ein digitales OFDM-Mehrträger-Übertragungssystem zur Durchführung des Verfahrens sowie einen digitalen OFDM-Mehrträger-Sender und einen digitalen OFDM-Mehrträger-Empfänger, die zum Einsatz in einem digitalen OFDM-Mehrträger-Übertragungssystem geeignet sind.

Während der letzten Jahre ist für den terrestrischen digitalen Hörrundfunk das digitale Übertragungssystem DAB (DAB von "Digital Audio Broadcasting") entwickelt worden. Das bekannte System eignet sich zur Übertragung qualitativ hochwertiger Audioprogramme zu mobilen, portablen und festinstallierten Empfängern. Grundsätzlich ist es möglich, über das DAB-Übertragungssystem auch Zusatzdaten mit verhältnismäßig niedrigen Datenraten, z. B. programmbegleitende Informationen, Verkehrsinformationen, zu übermitteln. Mehrere Audioprogramme bzw. Datendienste werden in einem sogenannten DAB-Ensemble zusammengefaßt und gemeinsam mit Hilfe eines ausgewählten COFDM-Übertragungsverfahrens (COFDM von Coded Orthogonal Frequency Division Multiplexing) auf einer Sendefrequenz abgestrahlt. Mit dem bekannten DAB-Übertragungssystem ist es derzeit möglich, eine maximal nutzbare Nettodatenrate von 1728 kBit/s zu übertragen. Aufgrund der rasanten Entwicklung auf dem Multimediagebiet besteht ein großes Interesse, sogenannte Mehrwertdienste, wie z. B. Videoprogramme, mit höheren Datenraten zu übertragen, die die derzeit nutzbare Nettodatenrate von 1728 kBit/s überschreiten können. Das herkömmliche DAB-System ist jedoch insbesondere für den Mobilempfang höherratiger Daten nicht geeignet, da der eingesetzte Fehlerschutz zu schwach ist.

Der Erfindung liegt daher die Aufgabe zugrunde, das bestehende DAB-Übertragungssystem derart weiterzuentwickeln, daß Mehrwertdienste wie Videoprogramme mit höheren Datenraten ohne Verschlechterung der Übertragungsqualität übertragen werden können.

Die Erfindung löst dieses technische Problem durch die Verfahrensschritte des Anspruchs 1 sowie durch die Merkmale der Ansprüche 8, 17 und 20.

Vorteilhafte Weiterbildungen und Ausführungsformen sind in den jeweiligen abhängigen Ansprüchen angegeben.

Der Kerngedanke der Erfindung ist darin zu sehen, ausgehend vom bestehenden DAB-Übertragungssystem ein digitales OFDM-Mehrträger-Übertragungssystem bereitzustellen, das zu einem verbesserten Systemverhalten führt. Gleichzeitig wurde bei der Konzipierung des digitalen OFDM-Mehrträger-Übertragungssystems darauf geachtet, daß die aus dem bestehenden DAB-Übertragunssystem bekannten Hardware-Komponenten verwendet werden können, so daß es möglich ist, die Erfindung ohne großen Aufwand in ein bestehendes DAB-Übertragungssystem einzufügen. Der Einfachheit halber wird das erfindungsgemäße Übertragungssytem X-DAB-Übertragungssytem genannt. Der Ausdruck "X-DAB" steht dabei für erweitertes bzw. verbessertes DAB-Übertragungssystem (X-DAB von "Extended Digital Audio Broadcasting"). Um von vornherein einem möglichen Mißverständnis entgegenzuwirken, sei angemerkt, daß mit dem X-DAB-Übertragungssystem vorteilhafterweise hochratige Datensignale, wie z.B. Videosignale neben Audioprogrammen zu mobilen Empfängern übermittelt werden können, obwohl dies mit einem herkömmlichen DAB-Übertragungssytem gerade nicht mit ausreichender Qualität möglich ist.
Nach dem erfindungsgemäßen Verfahren zur OFDM-Mehrträger-Übertragung von digitalen Rundfunksignalen wird wie beim bekannten DAB-System zunächst wenigstens ein Quelldatenstrom erzeugt, der auf mehrere Rahmen vorbestimmter Länge aufgeteilt wird. Um ein gegenüber dem DAB-Übertragungssystem deutlich verbessertes Systemverhalten zu erreichen, wird der Quelldatenstrom in N parallele Teildatenströme zerlegt, die jeweils einem getrennten Kanalcodierer vorbestimmter Coderate zugeführt werden. Jeder Kanalcodierer liefert an seinem Ausgang eine codierte, vorzugsweise faltungscodierte Bitfolge von M Bits. Die Bits der codierten N parallelen Teildatenströme werden jeweils zu einem N-Tupel, d.h zu einer Gruppe oder einem Vektor von N Bits, zusammengefaßt und auf ein komplexes Symbol eines 2^{N}-PSK-Symbolalphabets abgebildet. Diese sogenannte codierte Modulationstechnik ist an sich bekannt. Der wesentliche Unterschied zum bestehenden DAB-Übertragungssystem besteht darin, daß das X-DAB-Übertragungssystem unmittelbar nach der Kanalcodierung des Quelldatenstroms komplexe Symbole oder deren N-Bit-Adresse anstelle von einzelnen Bits verarbeitet. Es hat sich gezeigt, daß die verbesserten Systemeigenschaften gerade auf dieser Maßnahme beruhen. Demzufolge werden nicht einzelne Bits sondern die komplexen Symbole zu Blöcken vorbestimmter Größe zusammengefaßt. Wie beim bekannten DAB-Übertragungssystem, bei dem jedoch eine Abbildung von Bits auf komplexe Symbole erst nach der Blockbildung vorgenommen wird, werden die komplexen Symbole jedes Blocks jeweils verschiedenen Unterträgern zugewiesen. Anschließend wird ein analoges OFDM-Signal aus den komplexen Symbolen jedes Blocks gebildet und zu Empfangseinrichtungen abgestrahlt.

Zur Vermeidung von Übertragungsfehlern, die aufgrund des zeitselektiven Verhaltens eines Mobilfunkkanals auftreten, werden die komplexen Symbole vor der Blockbildung zeitlich verschachtelt. Es sei darauf hingewiesen, daß beim bekannten DAB-Übertragungssystem nicht komplexe Symbole sondern einzelne Bits zeitlich verschachtelt werden. Um die durch einen frequenzselektiven Mobilfunkkanal verursachten Signalbeeinträchtigungen zu beseitigen, werden nach der Blockbildung die komplexen Symbole jedes Blocks mit Bezug auf die Frequenz verschachtelt, wie dies auch in einem bekannten DAB-Übertragungssystem erfolgt. Ziel der Zeit- und Frequenzverschachtelung ist es, benachbarte Signalelemente möglichst weit voneinander getrennt zu übertragen, um so Bündelfehler benachbarter Informationselemente zu vermeiden.

In an sich bekannter Weise werden die komplexen Symbole jedes Blocks einer differentiellen Modulation auf jedem Unterträger unterworfen.

Im Gegensatz zum bekannten DAB-Übertragungssystem, bei dem die Unterträger jedes Blocks einer 4-PSK-Modulation unterworfen werden, erfolgt beim erfindungsgemäßen X-DAB-Übertragungssytem eine 2^{N}-PSK-Modulation der Unterträger, wobei N größer oder gleich 3 gewählt werden kann. Obwohl die Erfindung eine höherstufige Modulationsart - wenigstens eine 8-PSK - als das bekannte DAB-Übertragungssystem verwenden kann, verschlechtert sich, wie man eigentlich erwarten könnte, die Systemqualität bei gleichbleibendem empfängerseitigem Signalstörabstand nicht. Die Ursache liegt wiederum in der gegenüber dem bekannten DAB-Übertragungssystem vorgelagerten Symbolabbildung.

Neben verbesserten Systemeigenschaften zeichnet sich das erfindungsgemäße digitale OFDM-Mehrträger-Übertragungssystem durch seine Abwärtskompatibilität zum konventionellen DAB-System aus. Mit Abwärtskompatibilität soll zum Ausdruck kommen, daß das erfindungsgemäße X-DAB-Übertragungssystem in ein bestehendes DAB-Übertragungssystem eingebettet werden kann, so daß DAB-Programme und X-DAB-Programme in einem gemeinsamen Übertragungsrahmen übermittelt werden können. Eine solche Koexistenz beider Übertragungssysteme wird zum einen durch die Verwendung gleicher Parameter für das OFDM-Verfahren einschließlich des Frequenzinterleavings und der differentiellen Modulation erreicht. Um den zusätzlichen Hardware- und Software-Aufwand zur Implementierung des erfindungsgemäßen OFDM-Mehrträger-Übertragungssystems zu minimieren, werden außerdem die aus dem DAB-System bekannten Faltungscoder, Faltungsdecoder, Zeitinterleaver und Zeitdeinterleaver benutzt.

Zum Empfang eines OFDM-Signals ist eine Empfangseinrichtung vorgesehen, die zunächst wie ein DAB-Empfänger aufgebaut ist. Die bekannten Baugruppen umfassen einen OFDM-Demodulator mit einem A/D-Wandler und einer Einrichtung zur diskreten Fourier-Information des OFDM-Signals, einen differentiellen Demodulator und einen Frequenzdeinterleaver. Anstatt, wie bei bekannten DAB-Empfängern, das OFDM-Signal in einen Bitstrom umzusetzen und anschließend einer Einrichtung zum Entfernen der Blockstruktur zuzuführen, werden die komplexen Symbole selbst einer Einrichtung zugeführt, die die Blockstruktur wieder beseitigt. Der Strom komplexer Symbole wird einem Demultiplexer zum zeitlichen Demultiplexen der komplexen Symbole verschiedener Quelldatenströme zugeführt. Ein Zeitdeinterleaver macht die zeitliche Verschachtelung der komplexen Symbole wieder rückgängig. Im Unterschied zu einem bekannten DAB-Empfänger werden die Datenströme nicht bitweise sondern auf der Ebene komplexer Symbole einer Kanaldecodierung unterzogen. Zu diesem Zweck werden die komplexen Empfangssymbole an N parallel geschaltete Metrik-Berechnungseinrichtungen angelegt. Jeder Metrik-Berechnungseinrichtung ist ein Faltungsdecoder nachgeschaltet. Die Ausgänge der Faltungsdecoder sind gemäß einer ausgewählten, sendeseitig durchgeführten Symbolabbildungsvorschrift, z. B. einer Natural Mapping- oder Pragmatic Mapping-Abbildungsvorschrift, zu den entsprechenden Metrik-Berechnungseinrichtungen über zugeordnete komplementäre Faltungscoder rückgekoppelt. Am Ausgang jedes Faltungsdecoders liegen die jeweils decodierten Teildatenströme an. Die einzelnen Teildatenströme werden zur weiteren Verarbeitung einem Quellendecoder zugeführt.

Die Erfindung wird nachstehend anhand eines Ausführungsbeispiels in Verbindung mit den beiliegenden Zeichnungen näher erläutert. Es zeigen:
- Fig. 1: das sendeseitige Blockschaltbild eines bekannten DAB-Senders, dem ein erfindungsgemäßer digitaler OFDM-Mehrträger-Sender zugefügt ist,
- Fig. 2: eine dreistufige Codier-Modulationseinrichtung nach Fig. 1,
- Fig. 3: einen dreistufigen Decoder für eine codierte 8-PSK-Modulation, der in einem erfindungsgemäßen OFDM-Mehrträger-Empfänger verwendbar ist,
- Fig. 4: die Struktur eines Übertragungsrahmens, wie er am Ausgang eines OFDM-Signalgenerators anliegt, in dem sowohl DAB- als auch X-DAB-Programme übertragen werden können,
- Fig. 5: eine Natural-Mapping-Abbildungsvorschrift, die vom Symbol-Mapper ausgeführt wird,
- Fig. 6: eine alternative Abbildungsvorschrift, Pragmatic Mapping genannt, die vom Symbol-Mapper durchgeführt werden kann.

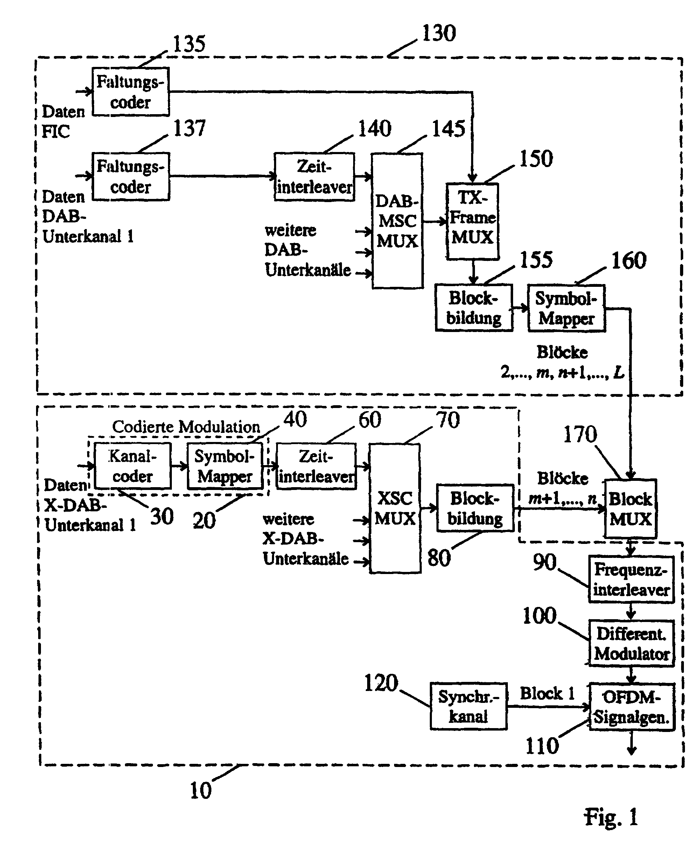

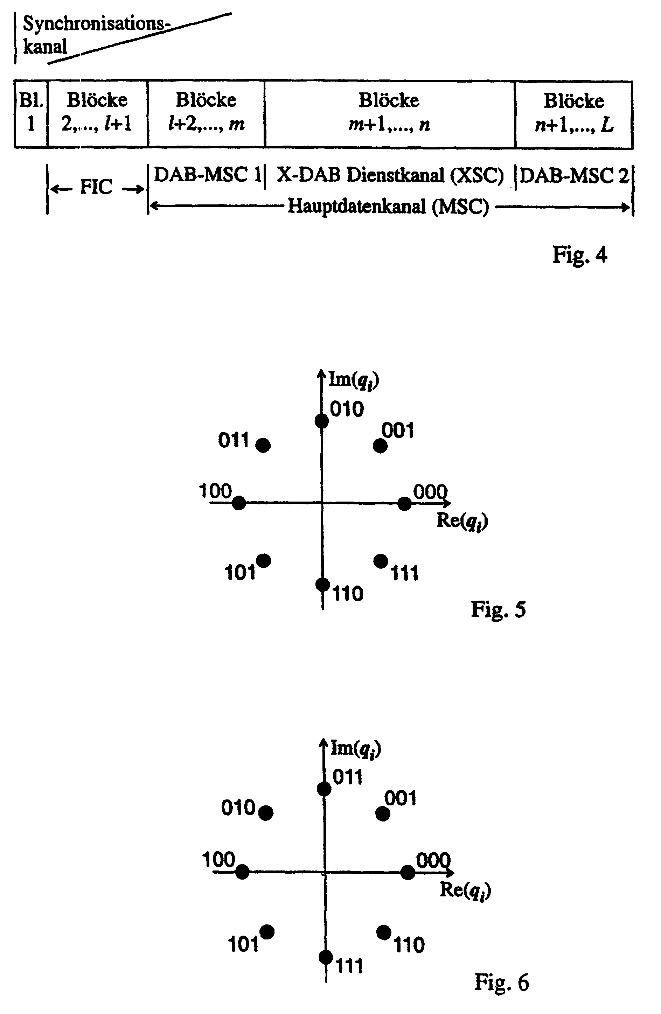

In Fig. 1 ist die Sendeseite eines digitalen OFDM-Mehrträger-Übertragungssystems, in dem die Erfindung verwirklicht ist, dargestellt. Mit 10 ist allgemein der erfindungsgemäße digitale OFDM-Mehrträger-Sender bezeichnet, der nachfolgend X-DAB-Sender genannt wird. Der X-DAB-Sender 10 weist wenigstens eine an sich bekannte Einrichtung 20 zur codierten Modulation eines Quelldatenstroms auf. Die Anzahl parallelgeschalteter Codier-Modulationseinrichtungen 20 richtet sich nach der Anzahl von verschiedenen Quelldatenströmen, die der X-DAB-Sender 10 abstrahlen soll. Der von einer nicht dargestellten Quelle kommende Quelldatenstrom, der ein MPEG-Videosignal hoher Datenrate sein kann, wird auf mehrere logische Rahmen vorbestimmter Länge aufgeteilt. Jeder logische Rahmen wird auf einen Teil eines Übertragungsrahmens, wie er beispielsweise in Fig. 4 gezeigt ist, abgebildet. Für das Beispiel sei eine Dauer des Übertragungsrahmens von jeweils 24 ms angenommen, wobei jeder Rahmen L=76 OFDM-Symbole beinhaltet. Jedes OFDM-Symbol umfasse 384 Unterträger, die jeweils ein komplexes Symbol eines ausgewählten Symbolalphabets - z.B. eines 8-PSK-Symbolalphabets - tragen. Zur einfachen und klaren Darstellung ist in Fig. 1 nur eine Codier-Modulationseinrichtung 20 dargestellt. Jede Codier-Modulationseinrichtung 20 umfaßt mehrere parallelgeschaltete Faltungscoder 32, 34 und 36, die allesamt bekannt sind. Die Anzahl parallel geschalteter Faltungscoder hängt davon ab, in wie viele Teildatenströme ein Quelldatenstrom zerlegt werden soll. Es hat sich als vorteilhaft erwiesen, jeden Rahmen des Quelldatenstrom auf drei Teildatenströme aufzuteilen, die unterschiedliche Längen aufweisen können. Die drei parallelen Teildatenströme, nachfolgend mit 0, 1 und 2 bezeichnet, des Quelldatenstroms werden dem Faltungscoder 32, dem Faltungscoder 34 bzw. dem Faltungscoder 36 zugeführt und mit einer vorbestimmten Coderate faltungscodiert. Die Coderate jedes Faltungscoders ist entsprechend einem Optimierungskriterium auszuwählen. Dabei ist darauf zu achten, daß jeder Faltungscoder 32, 34 und 36 in jeden Teildatenstrom so viel Redundanz einfügt, daß im Empfänger eine Fehlerkorrektur möglich wird. Für die Codierung der Informationsbits jedes Teildatenstroms können grundsätzlich die gleichen ratenkompatiblen punktierten Faltungscodes (RCPC-Codes) wie bei einem bekannten DAB-Sender angewandt werden. Dies vereinfacht nicht nur die Entwicklung und den Aufbau des X-DAB-Senders 10 sondern auch eines X-DAB-Empfängers, da die in DAB-Empfängern implementierten Viterbi-Decoder auch in einem X-DAB-Empfäner eingesetzt werden können. Jeder Teildatenstrom umfaßt eine Anzahl Bits, deren Summe gleich der Anzahl der Bits in einem logischen Rahmen des Quelldatenstroms ist. Einzige Voraussetzung ist, daß jeder Faltungscoder 32, 34 und 36 einen codierten Teildatenstrom mit M Bits pro logischem Rahmen erzeugt. Die Ausgänge der Faltungscoder 32, 34 und 36 sind mit den Eingängen eines Symbol-Mappers 40 verbunden.

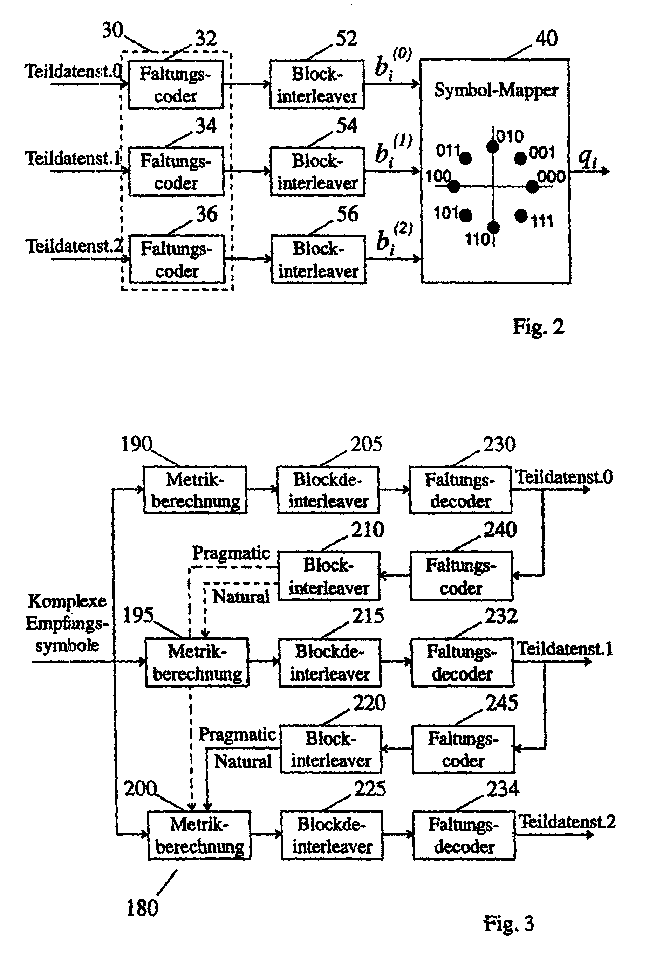

In Fig. 2 ist die Codier-Modulationseinrichtung 20 dargestellt, deren Funktion nachfolgend ausführlicher erläutert wird. Der Teildatenstrom 0 wird an den Faltungscoder 32, der Teildatenstrom 1 an den Faltungscoder 34 und der Teildatenstrom 2 an den Faltungscoder 36 angelegt. Jeder Faltungscoder sorgt dafür, daß an seinem Ausgang jeweils ein codierter Teildatenstrom mit je M Bits, anliegt. Ein an sich bekannter Blockinterleaver kann jeweils mit einem Faltungscoder in Serie geschaltet sein. Insbesondere folgt dem Faltungscoder 32 der Blockinterleaver 52, dem Faltungscoder 34 der Blockinterleaver 54 und dem Faltungscoder 36 der Blockinterleaver 56. Der Einsatz der Blockinterleaver ist jedoch nur fakultativ zu sehen. Wie in Fig. 2 dargestellt ist, sind die Ausgänge der Faltungscoder 32, 34 und 36 über die Blockinterleaver 52, 54 bzw. 56 mit dem Symbol-Mapper 40 verbunden. Die am Ausgang der Faltungscoder 32, 34 und 36 anliegenden Bits jedes codierten Teildatenstroms werden nacheinander jeweils zu einer Gruppe oder einem Vektor aus drei Bits bᵢ⁽⁰⁾, b,⁽¹⁾, bᵢ⁽²⁾ zusammengefaßt. Der Symbol-Mapper 40 ist beispielhaft derart implementiert, daß er ein 3-Bit-Tuppel auf ein komplexes Symbol eines 8-PSK-Symbolalphabets abbilden kann. Der Symbol-Mapper 40 führt daher eine 8-PSK-Modulation durch. Die Codier-Modulationeinrichtung 20 stellt am Ausgang komplexe Symbole eines 8-PSK-Symbolalphabets bereit, wobei die komplexen Symbole selbst oder zweckmäßigerweise deren 3-Bit-Adressen weiterverarbeitet werden.

In Fig. 5 und 6 sind zwei alternative Abbildungsvorschriften für eine 8-PSK-Modulation gezeigt. Fig. 5 zeigt die sogenannte Natural-Mapping-Vorschrift, wohingegen Fig. 6 die sogenannte Pragmatic-Mapping-Vorschrift zeigt. Wie weiter unten noch näher erläutert wird, hängt von der Wahl der entsprechenden Abbildungsvorschrift die Implementierung eines zugehörigen X-DAB-Empfängers ab. Der Entwurf des dreistufigen Kanalcodierers 30 und der verwendeten Abbildungsvorschrift ist mit Bezug auf ein Optimierungskriterium (z. B. erzielbare minimale Bitfehlerrate nach der Decodierung im Empfänger) aufeinander abzustimmen. Dies ist aber nicht Thema der vorliegenden Erfindung.

Die am Ausgang des Symbol-Mappers 40 anliegenden komplexen Symbole, die auch als eine 3-Bit-Adresse darstellbar sind, werden an einen an sich bekannten Zeitinterleaver 60 angelegt. Eine Besonderheit des X-DAB-Senders 10 ist darin zu sehen, daß der Zeitinterleaver 60 keine einzelnen Bits, wie dies bei einem bekannten DAB-Sender geschieht, sondern die einzelnen komplexen Symbole bzw. deren 3-Bit-Adressen zeitlich verschachtelt. Sofern mehrere Quelldatenströme gleichzeitig übertragen werden sollen, sind mehrere parallele Zweige, die auch X-DAB-Unterkanäle genannt werden, vorzusehen. Jeder Zweig enthält eine Codier-Modulationseinrichtung 20 sowie einen Zeitinterleaver 60 und ist mit dem jeweiligen Eingang eines XSC-Rahmenmultiplexer 70 verbunden. Der Ausdruck XSC (X-DAB Service Channel, XSC) weist auf den Nutzdatenkanal des X-DAB-Senders 10 in dem Übertragungsrahmen nach Fig. 4 hin. An den Ausgang des XSC-Rahmenmultiplexers 70 kann ein weiterer Rahmenmultiplexer (nicht dargestellt) angeschaltet sein, der die mittels einer weiteren Codier-Modulationseinrichtung 20 (nicht gezeigt) verarbeiteten Steuerdaten ohne einen nachfolgenden Zeitinterleaver 60 in den Übertragungsrahmen nach Fig. 4 einbindet. Wie Fig. 1 zeigt, ist der Ausgang des XSC-Multiplexers 70 mit dem Eingang einer an sich bekannten Blockbildungseinrichtung 80 verbunden. Die Blockbildungseinrichtung 80 dient dazu, jeweils die ein OFDM-Symbol darstellenden komplexen Symbole zu einem Block zusammenzufassen. Am Ausgang der Blockbildungseinrichtung 80 liegen daher Blöcke an, die jeweils eine vorbestimmte Anzahl von komplexen Symbolen umfassen. In dem Beispiel umfaßt jeder Block 384 komplexe Symbole entsprechend der Anzahl Unterträger eines OFDM-Symbols. Es ist wichtig, zu erkennen, daß im Unterschied zu einem bekannten DAB-Sender die Blockbildungseinrichtung 80 keine einzelnen Bits sondern komplexe Symbole, also Bitgruppen, zusammenfaßt. Der Ausgang der Blockbildungseinrichtung 80 kann unmittelbar mit dem Eingang eines an sich bekannten Frequenzinterleavers 90 verbunden sein. Der Frequenzinterleaver 90 dient dazu, die aufgrund des frequenzselektiven Verhaltens des Mobilfunkkanals verursachten Signalstörungen zu beseitigen. Dem Frequenzinterleaver 90 ist ein differentieller Modulator 100 nachgeschaltet. Der differentielle Modulator 100 dient dazu, die Unterträger jeweils eines Blocks mit den komplexen Symbolen zu modulieren. Jeder modulierte Unterträger eines Blocks wird einem an sich bekannten OFDM-Signalgenerator 110 zugeführt. Der OFDM-Signalgenerator 110 hat die Aufgabe, aus den modulierten Unterträgern jeweils eines Blocks das dazugehörige analoge OFDM-Signal zu erzeugen. Mit anderen Worten liefert der OFDM-Signalgenerator 110 für jeden Block ein OFDM-Signal, das als Summensignal der einzelnen Unterträger aufgefaßt werden kann. Gewöhnlich setzt sich der OFDM-Signalgenerator 110 aus einer Einrichtung zur inversen diskreten Fourier-Transformation und einem D/A-Wandler zusammen. Das am Ausgang des OFDM-Signalgenerators 110 anliegende OFDM-Signal kann über eine Sendeeinrichtung zu zahlreichen Empfangseinrichtungen abgestrahlt werden. Man beachte, daß die Funktionsweise des Frequenzinterleavers 90, des differentiellen Modulators 100 und des OFDM-Signalgenerators 110 mit den entsprechenden Funktionsblöcken eines bekannten DAB-Senders im wesentlichen übereinstimmen. Eine detailliertere Beschreibung dieser Funktionsblöcke erübrigt sich deshalb.

Wie in Fig. 1 dargestellt, ist der X-DAB-Sender 10 in einen bekannten DAB-Sender eingefügt. Der bekannte DAB-Sender umfaßt die zu einem Senderteil 130 zusammengefassten bekannten Komponenten, insbesondere einen Faltungscoder 135 zur Codierung von Steuerdaten, einen Faltungscoder 137 zur Codierung eines Quelldatenstroms, einen Zeitinterleaver 140, einen DAB-MSC-Rahmenmultiplexer, einen zusätzlichen Rahmenmultiplexer 150, eine Blockbildungseinrichtung 155, einen Symbol-Mapper 160 sowie den Frequenzinterleaver 90, den differentiellen Modulator 100 und den OFDM-Signalgenerator 110, die der DAB-Sender und der X-DAB-Sender 10 gemeinsam benutzen. Da der DAB-Sender allgemein bekannt ist, werden die einzelnen Funktionsblöcke nicht weiter erläutert. Wichtig ist jedoch, zu erkennen, daß der Symbol-Mapper 160 der Blockbildungseinrichtung 155 nachgeschaltet ist. Dies hat zur Folge, daß der Faltungscoder 137, der Zeitinterleaver 140 und die Blockbildungseinrichtung 155 des bekannten DAB-Sender 130, 90, 100 und 110 die Datenströme bitweise und nicht als komplexe Symbole verarbeiten. Um den erfindungsgemäßen X-DAB-Sender 10 mit dem bekannten DAB-Sender 130, 90, 100 und 110 verschmelzen zu können, ist ein Blockmultiplexer 170 vorgesehen, der die Blöcke des X-DAB-Senders 10 und die Blöcke des DAB-Sender in vorbestimmter Weise in den Übertragungsrahmen nach Fig. 4 einbindet.

Fig. 1 zeigt ferner eine Einrichtung 120 zur Erzeugung von Synchronisationsdaten, die ebenfalls mit dem OFDM-Signalgenerator 110 verbunden ist.

Wir betrachten nunmehr die Struktur eines Übertragungsrahmens, der von dem in Fig. 1 dargestellten DAB- und X-DAB-Sender erzeugt werden kann. Der in Fig. 4 gezeigte Übertragungsrahmen umfaßt beispielsweise L=76 Blöcke entsprechend den 76 OFDM-Symbolen. Jeder Übertragungsrahmen gliedert sich in drei zeitlich aufeinanderfolgende Teile: den Synchronisationskanal, der im Synchronisationskanalgenerator 120 erzeugt wird und den ersten Block des Rahmens belegt, den Steuerkanal FIC (FIC von Fast Information Channel), der die Blöcke 2 bis l+1 belegt, sowie den Hauptdatenkanal MSC (MSC von Main Service Channel), der in den Blöcken l+2 bis L untergebracht ist. Ein sogenanntes Nullsymbol im Synchronisationskanal ist hier der Einfachheit halber nicht dargestellt. In dem Hauptdatenkanal MSC können die Audioprogramme und Datendienste jeweils in den, verschiedenen Datenquellen zugeordneten Unterkanälen eingebettet sein. Da der Aufbau des Synchronisations- und des Steuerkanals sowohl beim DAB- als auch beim X-DAB-Sender 10 vorteilhafterweise identisch sind, können die darin enthaltenen Informationen sowohl von einem bekannten DAB-Empfänger als auch von einem erfindungsgemäßen X-DAB-Empfänger ausgewertet werden. Wenigstens ein Teil des MSC-Hauptdatenkanal wird von einem XSC-Kanal eingenommen, in dem beispielsweise die mittels des X-DAB-Senders 10 zu übertragenden höherratigen Viedeodaten einer oder mehrerer Quellen bzw. Unterkanäle enthalten sein können. Die im DAB-Standard in dem Übertragungsrahmen zu übertragenden Unterkanäle sind in Fig. 4 mit DAB-MSC bezeichnet. Da, wie bereits erwähnt, die Steuerdaten im FIC-Kanal unverändert übertragen werden, kann der bekannte DAB-Empfänger die Steuerdaten, auch wenn sie von dem X-DAB-Sender 10 erzeugt worden sind, decodieren und anhand der darin enthaltenen Informationen die im Übertragungsrahmen im DAB-Standardformat übertragenen Unterkanäle DAB-MSC erkennen und decodieren. Eine Dcodierung der XSC-Kanäle ist jedoch nicht möglich.

Der MSC-Multiplexer 145, der Rahmenmultiplexer 150, der XSC-Rahmenmultiplexer 70 sowie der Blockmultiplexer 170 sorgen dafür, daß die im DAB-Senderteil 130 und im X-DAB-Sender 10 gebildeten Dienste-Blöcke DAB-MSC bzw. XSC in einer vorbestimmten Reihenfolge in dem in Fig. 4 gezeigten Übertragungsrahmen eingefügt werden. In dem Hauptdatenkanal MSC des in Fig. 4 gezeigten Übertragungsrahmen sind beispielsweise mehrere DAB-MSC-Blöcke jeweils vor und nach den XSC-Blöcken untergebracht. Nach dem Blockmultiplex durch den Blockmultiplexer 170 erfolgt für beide Blocktypen gemeinsam die schon erwähnte Frequenzverschachtelung der komplexen Symbole jedes DAB-MSC- und jedes XSC-Blocks, die differenzielle Modulation sowie die Erzeugung der OFDM-Signale.

Dank dieser abwärtskompatiblen Implementierung des erfindungsgemäßen X-DAB-Senders 10 können in dem Übertragungsrahmen nach Fig. 4 sowohl von einem DAB-Sender als auch von dem X-DAB-Sender 10 erzeugte Datenblöcke übertragen werden.

In Fig. 3 ist beispielhaft ein dreistufiger Decoder 180 zur Decodierung eines Datenstroms, der senderseitig einer codierten 8-PSK-Modulation unterworfen worden ist, dargestellt. Der dreistufige Decoder 180 ist wesentlicher Bestandteil eines erfindungsgemäßen digitalen OFDM-Mehrträger-Empfängers, nachfolgend X-DAB-Empfänger genannt. Der X-DAB-Empfänger weist zunächst die gleichen Funktionsblöcke wie ein herkömmlicher DAB-Empfänger auf. Dazu gehört ein OFDM-Demodulator, der aus einem A/D-Wandler und aus einer Einrichtung zur diskreten Fourier-Transformation besteht. Dem OFDM-Demodulator ist ein differentieller Demodulator sowie ein Frequenzdeinterleaver nachgeschaltet. Dem Frequenzdeinterleaver folgt eine Einrichtung zum Entfernen der Blockkstruktur. Am Ausgang dieser Einrichtung liegt somit eine Folge von komplexen Symbolen an. Die komplexen Symbole durchlaufen einen Demultiplexer zum zeitlichen Demulitplizieren der komplexen Symbole verschiedener Quelldatenströme. Ein nachgeschalteter Zeitdeinterleaver fungiert im wesentlichen wie ein bekannter Zeitdeinterleaver eines bekannten DAB-Empfänger mit dem wesentlichen Unterschied, daß nicht einzelne Bits, sondern die komplexen Symbole, d. h. Bitgruppen, verarbeitet werden. Um die X-DAB-Blöcke decodieren zu können, ist dem Zeitdeinterleaver der in Fig. 3 dargestellte dreistufige Decoder 180 für eine codierte 8-PSK-Modulation nachgeschaltet. Zur Rückgewinnung der drei Teildatenströme 0, 1 und 2 des übertragenen Quelldatenstroms benötigt der dreistufige Decoder 180 drei parallelgeschaltete Metrik-Berechnungseinrichtungen 190, 195 und 200. Fakultativ kann jeder Metrik-Berechnungseinrichtung ein Blockdeinterleaver 205, 215 bzw. 225 nachgeschaltet sein. Jede Metrik-Berechnungseinrichtung 190, 195, 200 ist unmittelbar oder über den jeweiligen Blockdeinterleaver 205, 215 bzw. 225 mit einem Faltungsdecoder 230, 232 bzw. 234 verbunden ist. In Abhängigkeit der Abbildungsvorschrift, die der Symbol-Mapper 40 des X-DAB-Senders 10 durchgeführt hat, sind die Ausgänge der Faltungsdecoder 230, 232 und 234 zu den Metrik-Berechnungseinrichtungen über zugeordnete, komplementäre Faltungscodierer 240 bzw. 245 rückgekoppelt. Für den Fall, daß der Symbol-Mapper 40 eine Pragmatic-Abbildung durchgeführt hat, ist der Faltungsdecoder 230 über einen komplementären Faltungscoder 240 und einen Blockinterleaver 210 zur Metrik-Berechnungseinrichtung 200 rückgekoppelt. Der Faltungsdecoder 232 ist über einen komplementären Faltungscoder 245 und einen Blockinterleaver 220 ebenfalls zur Metrik-Berechnungseinrichtung 200 rückgekoppelt. In dem Fall, daß der Symbol-Mapper 40 eine Natural-Abbildung durchgeführt hat, ist der Faltungsdecoder 230 über den komplementären Faltungscoder 240 und den Blockinterleaver 210 mit der Metrik-Berechnungseinrichtung 195 zu verbinden. Der Faltungsdecoder 232 ist wiederum über den komplementären Faltungscoder 245 und den Blockinterleaver 220 mit der Metrik-Berechnungseinrichtung 200 verbunden. Unter Metriken sind die Abstände der komplexen Empfangssymbole zu den jeweiligen, den Abbildungsvorschriften entsprechend angepaßten Entscheidungsschwellen in der komplexen Ebene zu verstehen, wobei zusätzlich eine Gewichtung mit einer entsprechenden Zuverlässigkeits- oder Kanalzustandsinformation erfolgen kann.

Ein weiterer Vorteil des erfindungsgemäßen X-DAB-Übertragungssystems gegenüber dem bekannten DAB-Übertragungssystem, der bei der Implementierung sogenannter "lokaler Fenster" im Übertragungsrahmen nach Fig. 4 auftritt, soll nicht unerwähnt bleiben. Mit Hilfe des OFDM-Verfahrens lassen sich Gleichwellennetze aufbauen, d.h. das Programmensemble wird von benachbarten Sendestationen auf der gleichen Frequenz abgestrahlt, ohne daß dies wie bei einem Empfänger des klassischen FM-Rundfunks zu Interferenzen führt. Um die typische FM-Rundfunkstruktur mit vielen Lokalprogrammen auch in einem DAB-Übertragungssystem nachbilden zu können, wird ein zusammenhängender Teil des Hauptdatenkanals MSC des in Fig. 4 gezeigten Übertragungsrahmens aus dem Gleichwellenbetrieb herausgenommen und an den einzelnen Sendestandorten werden die jeweiligen Lokalprogramme in dieses lokale Fenster eingespielt. Nachteilig wirkt sich hierbei die 4-PSK-Abbildungsvorschrift des DAB-Standards aus. So ist es möglich, daß 4-PSK-Symbole auf den Unterträgern eines OFDM-Symbols jeweils zwei Unterkanälen, d.h. zwei verschiedenen Datenquellen, zugeordnet sind. Demzufolge ist es unmöglich, die Grenzen zum lokalen Fenster innerhalb eines OFDM-Symbols festzulegen, ohne Störungen hervorzurufen. Der Bereich des Hauptdatenkanals MSC ist daher für den Gleichwellenbetrieb immer mit Füllbits zu erweitern, bis ein volles OFDM-Symbol belegt ist.
Bei dem erfindungsgenmäßen X-DAB-Übertragungssystem wird dieser Nachteil dadurch vermieden, daß die 2^{N}-PSK-Modulation im Symbol-Mapper 40 vor der zeitlichen Verschachtelung des Zeitinterleavers 60 erfolgt und somit eine unmittelbare Verbindung zu dem jeweiligen Programm besteht.Bei der Implementierung von lokalen Fenstern kann somit auch die Unterkanalgrenze zwischen Gleichwellen- und Lokalprogrammen innerhalb eines OFDM-Symbols liegen, ohne daß der Gleichwellenempfang gestört wird. Lokale Fenster lassen sich daher mit dem erfindungsgemäßen X-DAB-Übertragungssystem bandbreiteneffizienter ausführen.

## Patentansprüche

1. Verfahren zur OFDM-Mehrträger-Übertragung von digitalen Rundfunksignalen, insbesondere für digitale Mehrwertdienste,
mit folgenden Verfahrensschritten:
a) Erzeugen wenigstens eines Quelldatenstroms, der auf mehrere Rahmen vorbestimmter Länge aufgeteilt wird,
b) Zerlegen des Quelldatenstroms in N parallele Teildatenströme,
c) die N Teildatenströme werden jeweils einem getrennten Kanalcodierer (32, 34, 36) vorbestimmter Coderate zugeführt, wobei jeder Kanalcodierer eine codierte Bitfolge von M Bits liefert,
d) die Bits der in Schritt c) codierten N Teildatenströme werden jeweils zu einem N-Tupel zusammengefaßt und auf ein komplexes Symbol eines 2^{N}-PSK-Symbolalphabets (40) abgebildet,
e) die komplexen Symbole werden zu Blöcken vorbestimmter Größe zusammengefaßt,
f) die in Schritt e) blockweise zusammengefassten komplexen Symbole werden mit Bezug auf die Frequenz verschachtelt,
g) die komplexen Symbole jedes Blocks werden jeweils verschiedenen Unterträgern zugewiesen,
h) Bilden eines analogen OFDM-Signals aus den komplexen Symbolen jedes Blocks und Abstrahlen der OFDM-Signale zu Empfangseinrichtungen.

2. Verfahren zur OFDM-Mehrträger-Übertragung von digitalen Rundfunksignalen nach Anspruch 1,
**dadurch gekennzeichnet, daß** jeder Teildatenstrom in Schritt c) faltungscodiert wird.

3. Verfahren zur OFDM-Mehrträger-Übertragung von digitalen Rundfunksignalen nach Anspruch 1 oder 2,
**dadurch gekennzeichnet, daß** die in Schritt d) gebildeten komplexen Symbole zeitlich verschachtelt werden.

4. Verfahren zur OFDM-Mehrträger-Übertragung von digitalen Rundfunksignalen nach einem der Ansprüche 1 bis 3,
**dadurch gekennzeichnet, daß** N größer oder gleich 3 gesetzt wird.

5. Verfahren zur OFDM-Mehrträger-Übertragung von digitalen Rundfunksignalen nach einem der Ansprüche 1 bis 4,
**dadurch gekennzeichnet, daß** die komplexen Symbole in Schritt f) einer differentiellen Modulation auf jedem Unterträger unterworfen werden.

6. Verfahren zur OFDM-Mehrträger-Übertragung von digitalen Rundfunksignalen nach Anspruch 5,
**dadurch gekennzeichnet, daß** in Schritt g) die in Schritt f) modulierten komplexen Symbole einer inversen diskreten Fourier-Transformation unterworfen werden.

7. Verfahren zur OFDM-Mehrträger-Übertragung von digitalen Rundfunksignalen nach einem der Ansprüche 1 bis 6,
**dadurch gekennzeichnet, daß** mehrere Quelldatenströme erzeugt, gemäß den Schritten b) bis d) verarbeitet und anschließend zeitlich gemultiplext werden.

8. Digitales OFDM-Mehrträger-Übertragungssystem zur Durchführung des Verfahrens nach einem der Ansprüche 1 bis 7, umfassend:
a) eine Sendeeinrichtung (10) mit folgenden Merkmalen:
wenigstens ein Satz (30) von wenigstens N parallel geschalteten Kanalcodierern (32, 34, 36) vorbestimmter Coderate zur Codierung jeweils eines Teildatenstroms,
ein Symbol-Mapper (40), der mit den Ausgängen der N parallel geschalteten Kanalcodierer (32, 34, 36) verbunden ist, zur Abbildung eines N-Bit-Tupels auf ein komplexes Symbol eines 2^{N}-PSK-Symbolalphabets, eine Blockbildungseinrichtung (80) zur Zusammenfassung einer vorbestimmten Anzahl von komplexen Symbolen jeweils zu einem Block,
ein Mehrträger-Modulator (100) zur Modulation der jeweils zu einem Block zusammengefaßten komplexen Symbole,
einen zwischen die Blockbildungseinrichtung (80) und den Mehrträger-Modulator (100) geschalteten Frequenzinterleaver (90) zur Verschachtelung der komplexen Symbole jedes Blocks mit Bezug auf die Frequenz, und
eine Einrichtung (110) zur Erzeugung von analogen OFDM-Signalen aus den komplexen Symbolen jedes Blocks und zum Abstrahlen der analogen ODFM-Signale.

9. Digitales OFDM-Mehrträger-Übertragungssystem nach Anspruch 8, **gekennzeichnet durch** einen dem Symbol-Mapper (40) nachgeschalteten Zeitinterleaver (60) zur zeitlichen Verschachtelung der komplexen Symbole.

10. Digitales OFDM-Mehrträger-Übertragungssystem nach Anspruch 8 oder 9, **dadurch gekennzeichnet, daß** der Mehrträger-Modulator (100) eine differentielle Modulation auf jedem Unterträger vornimmt und daß jeder Kanalcodierer (32, 34, 36) ein Faltungscodierer ist.

11. Digitales OFDM-Mehrträger-Übertragungssystem nach einem der Ansprüche 8 bis 10, **gekennzeichnet durch** einen Rahmenmultiplexer (70) zum Multiplexen von komplexen Symbolen unterschiedlicher Quelldatenströme.

12. Digitales OFDM-Mehrträger-Übertragungssystem nach einem der Ansprüche 8 bis 11, **dadurch gekennzeichnet, daß** jedem Kanalcodierer (32, 34, 36) ein Blockinterleaver (52, 54, 56) nachgeschaltet ist.

13. Digitales OFDM-Mehrträger-Übertragungssystem nach einem der Ansprüche 8 bis 11, **gekennzeichnet durch**
b) einen parallel zur Sendeeinrichtung (10) angeordneten Sendeteil (130), der einen geblockten 4-PSK-Symbolstrom, wie er nach einem Symbol-Mapper (160) einer bekannten DAB-Sendereinrichtung vorliegt, liefert und der über einen Blockmultiplexer (170), an den auch die Blockbildungseinrichtung (80) der Sendeeinrichtung (10) angeschaltet ist, mit dem Frequenzinterleaver (90) verbunden ist.

14. Digitales OFDM-Mehrträger-Übertragungssystem nach einem der Ansprüche 8 bis 13,
**dadurch gekennzeichnet, daß** N größer oder gleich 3 ist.

15. Digitales OFDM-Mehrträger-Übertragungssystem nach einem der Ansprüche 8 bis 14, **gekennzeichnet durch**
c) eine Empfangseinrichtung mit folgenden Merkmalen:
ein OFDM-Demodulator,
ein differentieller Demodulator,
ein Frequenzdeinterleaver,
eine Einrichtung zum Auflösen der Blöcke,
ein Demultiplexer zum zeitlichen Demultiplexen der komplexen Symbole verschiedener Quelldatenströme,
ein Zeitdeinterleaver,
N parallel geschaltete Metrik-Berechnungseinrichtungen (190, 195, 200), denen jeweils ein separater Faltungsdecoder (230, 232, 234) nachgeschaltet ist,
wobei die Ausgänge der Faltungsdecoder (230, 232, 234) nach einer ausgewählten Symbolabbildungsvorschrift zu den entsprechenden Metrik-Berechnungseinrichtungen (195, 200) über zugeordnete komplementäre Faltungscodierer (190, 240, 245) rückgekoppelt sind.

16. Digitales OFDM-Mehrträger-Übertragungssystem nach Anspruch 15, **dadurch gekennzeichnet, daß** zwischen jeder Metrik-Berechnungseinrichtung (190, 195, 200) und jedem Faltungsdecoder (230, 232, 234) ein Blockdeinterleaver (205, 215, 225) sowie zwischen jedem Faltungscodierer (240, 245) zur Recodierung des jeweils ermittelten Datenbitstroms und der zugeordneten nachfolgenden Metrik-Berechnungseinrichtung (195, 200) ein Blockinterleaver (210, 220) geschaltet ist.

17. Digitaler OFDM-Mehrträger-Sender zum Einsatz in einem digitalen OFDM-Mehrträger-Übertragungssystem nach einem der Ansprüch 8 bis 16 mit folgenden Merkmalen:
wenigstens ein Satz (30) von wenigstens N parallel geschalteten Kanalcodierern (32, 34, 36) vorbestimmter Coderate zur Codierung jeweils eines Teildatenstroms, ein Symbol-Mapper (40), der mit den Ausgängen der N parallelgeschalteten Kanalcodierer (32, 34, 36) verbunden ist, zur Abbildung eines N-Bit-Tupels auf ein komplexes Symbol eines 2^{N}-PSK-Symbolalphabets,
eine Blockbildungseinrichtung (80) zur Zusammenfassung einer vorbestimmten Anzahl von komplexen Symbolen zu einem Block,
ein Mehrträger-Modulator (100) zur Modulation der zu einem Block zusammengefaßten komplexen Symbole, und
eine Einrichtung (110) zur Erzeugung von analogen OFDM-Signalen aus den komplexen Symbolen jedes Blocks und zum Abstrahlen der analogen ODFM-Signale und
einen zwischen die Blockbildungseinrichtung (80) und den Mehrträger-Modulator (100) geschalteten Frequenzinterleaver (90) zur Verschachtelung der komplexen Symbole jedes Blocks mit Bezug auf die Frequenz.

18. Digitaler OFDM-Mehrträger-Sender nach Anspruch 17, **gekennzeichnet durch** einen dem Symbol-Mapper (40) nachgeschalteten Zeitinterleaver (60) zur zeitlichen Verschachtelung der komplexen Symbole.

19. Digitaler OFDM-Mehrträger-Sender nach Anspruch 17 oder 18, **dadurch gekennzeichnet, daß** der Mehrträger-Modulator (100) eine differentielle Modulation auf jedem Unterträger vornimmt und daß jeder Kanalcodierer (32, 34, 36) ein Faltungscodierer ist.

20. Digitaler OFDM-Mehrträger-Empfänger zum Einsatz in einem digitalen OFDM-Mehrträger-Übertragungssystem nach einem der Ansprüche 8 bis 16, **gekennzeichnet durch**
einen OFDM-Demodulator,
einen differentieller Demodulator,
einen Frequenzdeinterleaver,
eine Einrichtung zum Auflösen der Blöcke,
einen Demultiplexer zum zeitlichen Demultiplexen der komplexen Symbole verschiedener Quelldatenströme,
einen Zeitdeinterleaver,
N parallel geschaltete Metrik-Berechnungseinrichtungen (190, 195, 200), denen jeweils ein separater Faltungsdecoder (230, 232, 234) nachgeschaltet ist,
wobei die Ausgänge der Faltungsdecoder (230, 232, 234) nach einer ausgewählten Symbolabbildungsvorschrift zu den entsprechenden Metrik-Berechnungseinrichtungen (190, 195, 200) über zugeordnete komplementäre Faltungscodierer (240, 245) rückgekoppelt sind.

## Claims

1. Method for OFDM multicarrier transmission of digital broadcast radio signals, in particular for digital added value services,
having the following method steps:
a) production of at least one source data stream, which is split between a number of frames of predetermined length,
b) breakdown of the source data stream into N parallel data stream elements,
c) the N data stream elements are each supplied to a separate channel coder (32, 34, 36) at a predetermined code rate, with each channel coder supplying a bit sequence of M bits,
d) the bits of the N data stream elements coded in step c) are each combined to form an N-tuple and are mapped onto a complex symbol of a 2^{N}-PSK symbol alphabet (40),
e) the complex symbols are combined to form blocks of a predetermined size,
f) the complex symbols combined in blocks in step e) are interleaved with reference to the frequency,
g) the complex symbols in each block are each assigned to different subcarriers, and
h) formation of an analogue OFDM signal from the complex symbols in each block, and transmission of the OFDM signals to receiving devices.

2. Method for OFDM multicarrier transmission of digital broadcast radio signals according to Claim 1,
**characterized in that** each data stream element is convolution-coded in step c).

3. Method for OFDM multicarrier transmission of digital broadcast radio signals according to Claim 1 or 2,
**characterized in that** the complex symbols formed in step d) are interleaved in time.

4. Method for OFDM multicarrier transmission of digital broadcast radio signals according to one of Claims 1 to 3,
**characterized in that** N is set to be greater than or equal to 3.

5. Method for OFDM multicarrier transmission of digital broadcast radio signals according to one of Claims 1 to 4,
**characterized in that** the complex symbols are subjected, in step f), to differential modulation on each subcarrier.

6. Method for OFDM multicarrier transmission of digital broadcast radio signals according to Claim 5,
**characterized in that**, in step g), the complex symbols modulated in step f) are subjected to inverse discrete Fourier transformation.

7. Method for OFDM multicarrier transmission of digital broadcast radio signals according to one of Claims 1 to 6,
**characterized in that** a number of source data streams are produced, are processed according to steps b) to d), and are then time-division multiplexed.

8. Digital OFDM multicarrier transmission system for carrying out the method according to one of Claims 1 to 7, comprising:
a) a transmitting device (10) having the following features:
at least one set (30) of at least N parallel-connected channel coders (32, 34, 36) with a predetermined code rate for coding one data stream element in each case,
a symbol mapper (40), which is connected to the outputs of the N parallel-connected channel coders (32, 34, 36), for mapping an N-bit tuple onto a complex symbol in a 2^{N} PSK symbol alphabet,
a block formation device (80) for combination of a predetermined number of complex symbols in each case to form a block,
a multicarrier modulator (100) for modulation of the respective complex symbols combined to form a block
a frequency interleaver (90), connected between the block formation device (80) and the multicarrier modulator (100), for interleaving the complex symbols in each block with respect to the frequency, and
a device (110) for producing analogue OFDM signals from the complex symbols in each block, and for transmission of the analogue OFDM signals.

9. Digital OFDM multicarrier transmission system according to Claim 8, **characterized by** a time interleaver (60), connected downstream from the symbol mapper (40), for time-domain interleaving of the complex symbols.

10. Digital OFDM multicarrier transmission system according to Claim 8 or 9, **characterized in that** the multicarrier modulator (100) carries out differential modulation on each subcarrier, and **in that** each channel coder (32, 34, 36) is a convolution coder.

11. Digital OFDM multicarrier transmission system according to one of Claims 8 to 10, **characterized by** a frame multiplexer (70) for multiplexing complex symbols in different source data streams.

12. Digital OFDM multicarrier transmission system according to one of Claims 8 to 11, **characterized in that** each channel coder (32, 34, 36) is followed by a block interleaver (52, 54, 56).

13. Digital OFDM multicarrier transmission system according to one of Claims 8 to 11, **characterized by**
b) a transmitting part (130), which is arranged in parallel with the transmitting device (10) and supplies a blocked 4-PSK symbol stream, as is produced after a symbol mapper (160) in a known DAB transmitter device, and which is connected to the frequency interleaver (90) via a block multiplexer (170), to which the block formation device (80) in the transmitting device (10) is connected.

14. Digital OFDM multicarrier transmission system according to one of Claims 8 to 13, **characterized in that** N is greater than or equal to 3.

15. Digital OFDM multicarrier transmission system according to one of Claims 8 to 14, **characterized by**
c) a receiving device having the following features:
an OFDM demodulator,
a differential demodulator,
a frequency deinterleaver,
a device for resolving the blocks,
a demultiplexer for time-domain demultiplexing of the complex symbols in different source data streams,
a time deinterleaver,
N parallel-connected metrix calculation devices (190, 195, 200), which are each followed by a separate convolution decoder (230, 232, 234),
the outputs of the convolution decoders (230, 232, 234) being fed back, in accordance with a selected symbol mapping rule, to the corresponding metrix calculation devices (195, 200) via associated complementary convolution coders (190, 240, 245).

16. Digital OFDM multicarrier transmission system according to Claim 15, **characterized in that** a block deinterleaver (205, 215, 225) is connected between each metrix calculation device (190, 195, 200) and each convolution decoder (230, 232, 234), and a block interleaver (210, 220) is connected between each convolution coder (240, 245) for recoding the respectively determined data bit stream, and the associated downstream metrix calculation device (195, 200).

17. Digital OFDM multicarrier transmitter for use in a digital OFDM multicarrier transmission system according to Claims 8 to 16, having the following features:
at least one set (30) of at least N parallel-connected channel coders (32, 34, 36) with a predetermined code rate for coding one data stream element in each case,
a symbol mapper (40), which is connected to the outputs of the N parallel-connected channel coders (32, 34, 36), for mapping an N-bit tuple onto a complex symbol in a 2^{N} PSK symbol alphabet,
a block formation device (80) for combination of a predetermined number of complex symbols to form a block,
a multicarrier modulator (100) for modulation of the complex symbols combined to form a block, and
a device (110) for producing analogue OFDM signals from the complex symbols in each block, and for transmission of the analogue OFDM signals, and
a frequency interleaver (90), connected between the block formation device (80) and the multicarrier modulator (100), for interleaving the complex symbols in each block with respect to the frequency.

18. Digital OFDM multicarrier transmitter according to Claim 17, **characterized by** a time interleaver (60), connected downstream from the symbol mapper (40), for time-domain interleaving of the complex symbols.

19. Digital OFDM multicarrier transmitter according to Claim 17 or 18, **characterized in that** the multicarrier modulator (100) carries out differential modulation on each subcarrier, and **in that** each channel coder (32, 34, 36) is a convolution coder.

20. Digital OFDM multicarrier receiver for use in a digital OFDM multicarrier transmission system according to Claims 8 to 16, **characterized by**:
an OFDM demodulator,
a differential demodulator,
a frequency deinterleaver,
a device for resolving the blocks,
a demultiplexer for time-domain demultiplexing of the complex symbols in different source data streams,
a time deinterleaver,
N parallel-connected metrix calculation devices (190, 195, 200), which are each followed by a separate convolution decoder (230, 232, 234),
the outputs of the convolution decoders (230, 232, 234) being fed back, in accordance with a selected symbol mapping rule, to the corresponding metrix calculation devices (195, 200) via associated complementary convolution coders (190, 240, 245).

## Revendications

1. Procédé pour la transmission OFDM à porteuses multiples de signaux radiophoniques numériques, en particulier pour des services additionnels avec les étapes suivantes du procédé :
a) production d'au moins un flux de données sources, qui est subdivisé en plusieurs trames de longueur prédéfinie,
b) découpage du flux de données sources en N flux de données partiels parallèles,
c) les N flux de données partiels sont acheminés chacun vers un codeur de canal séparé (32, 34, 36) dont le débit de codage est prédéfini, chaque codeur de canal délivrant une séquence codée de bits de M bits,
d) les bits des N flux de données partiels codés dans l'étape c) sont regroupés en un N-tuple et sont représentés par un symbole complexe d'un alphabet de 2^{N} symboles PSK (40),
e) les symboles complexes sont regroupés en blocs de taille prédéfinie,
f) les symboles complexes regroupés en blocs dans l'étape e) sont imbriqués en fonction de la fréquence,
g) les symboles complexes de chaque bloc sont attribués respectivement à diverses sous-porteuses,
h) formation d'un signal OFDM analogique à partir des symboles complexes de chaque bloc et émission des signaux OFDM vers les installations de réception.

2. Procédé pour la transmission OFDM à porteuses multiples de signaux radiophoniques numériques selon la revendication 1, **caractérisé en ce que** chaque flux de données partiel est codé en mode replié dans l'étape c).

3. Procédé pour la transmission OFDM à porteuses multiples de signaux radiophoniques numériques selon la revendication 1 ou 2, **caractérisé en ce que** les symboles complexes formés dans l'étape d) sont imbriqués en fonction du temps.

4. Procédé pour la transmission OFDM à porteuses multiples de signaux radiophoniques numériques selon l'une des revendications 1 à 3, **caractérisé en ce que** N est défini supérieur ou égal à 3.

5. Procédé pour la transmission OFDM à porteuses multiples de signaux radiophoniques numériques selon l'une des revendications 1 à 4, **caractérisé en ce que** les symboles complexes dans l'étape f) sont soumis à une modulation différentielle sur chaque sous-porteuse.

6. Procédé pour la transmission OFDM à porteuses multiples de signaux radiophoniques numériques selon la revendication 5, **caractérisé en ce que** clans l'étape g), les symboles complexes modulés clans l'étape f) sont soumis à une transformation de Fourier discrète inverse.

7. Procédé pour la transmission OFDM à porteuses multiples de signaux radiophoniques numériques selon l'une des revendications 1 à 6, **caractérisé en ce que** plusieurs flux de données sources sont produits, traités conformément aux étapes b) à d) et ensuite multiplexés de manière temporelle.

8. Système numérique de transmission OFDM à porteuses multiples pour l'exécution du procédé selon l'une des revendications 1 à 7, comportant :
a) une installation d'émission (10) ayant les caractéristiques suivantes :
au moins une série (30) d'au moins N codeurs de canal (32, 34, 36) branchés en parallèle dont le débit de codage est prédéfini, pour le codage chaque fois d'un flux de données partiel,
un système de transposition de symboles (40) qui est relié aux sorties des N codeurs de canal (32, 34, 36) branchés en parallèle, pour la représentation d'un N-tuple à N bits en un symbole complexe d'un alphabet de 2^{N} symboles PSK, un dispositif de formation de blocs (80) pour regrouper un nombre prédéfini de symboles complexes respectivement en un bloc,
un modulateur à porteuses multiples (100) pour la modulation des symboles complexes respectivement regroupés en un bloc,
un entrelaceur de fréquences (90) branché entre le dispositif de formation de blocs (80) et le modulateur à porteuses multiples (100) pour imbriquer les symboles complexes de chaque bloc en fonction de la fréquence, et
un dispositif (110) pour la production de signaux OFDM analogiques à partir des symboles complexes de chaque bloc et pour l'émission des signaux OFDM analogiques.

9. Système numérique de transmission OFDM à porteuses multiples selon la revendication 8, **caractérisé par** un entrelaceur en fonction du temps (60) branché en aval d'un système de transposition de symboles (40) pour imbriquer les symboles complexes en fonction du temps.

10. Système numérique de transmission OFDM à porteuses multiples selon la revendication 8 ou 9, **caractérisé en ce que** le modulateur à porteuses multiples (100) assure une modulation différentielle sur chaque sous-porteuse et **en ce que** chaque codeur de canal (32, 34, 36) est un codeur en mode replié.

11. Système numérique de transmission OFDM à porteuses multiples selon l'une des revendications 8 à 10, **caractérisé par** un multiplexeur de trames (70) pour le multiplexage de symboles complexes de divers flux de données sources.

12. Système numérique de transmission OFDM à porteuses multiples selon l'une des revendications 8 à 11, **caractérisé en ce qu'**un entrelaceur de blocs (52, 54, 56) est branché en aval de chaque codeur de canal (32, 34, 36).

13. Système numérique de transmission OFDM à porteuses multiples selon l'une des revendications 8 à 11, **caractérisé par**
b) un élément d'émission (130) disposé en parallèle avec le dispositif d'émission (10) qui délivre un flux de symboles PSK 4 bloqué tel celui présent après un système de transposition de symboles (160) d'un dispositif connu d'émission DAB, et qui est également branché à travers un multiplexeur de blocs (170) auquel est également branché un dispositif de formation de blocs (80) du dispositif d'émission (10), auquel est relié l'entrelaceur de fréquence (90).

14. Système numérique de transmission OFDM à porteuses multiples selon l'une des revendications 8 à 13, **caractérisé en ce que** N est supérieur ou égal à 3.

15. Système numérique de transmission OFDM à porteuses multiples selon l'une des revendications 8 à 14, **caractérisé par**
c) un dispositif de réception avec les caractéristiques suivantes :
un démodulateur OFDM,
un démodulateur différentiel,
un désentrelaceur de fréquences,
un dispositif pour l'ouverture des blocs,
un démultiplexeur pour le démultiplexage en fonction du temps des symboles complexes de divers flux de données sources,
un désentrelaceur en fonction du temps,
N dispositifs de calcul de métriques (190, 195, 200) branchés en parallèle, en aval de chacun desquels est branché un décodeur séparé en mode replié (230, 232, 234),
les sorties du décodeur en mode replié (230, 232, 234) étant rétrocouplées, selon une règle sélectionnée de représentation des symboles, sur les dispositifs de calcul de métriques (195, 200) correspondants à travers des codeurs en mode repliés complémentaires (190, 240, 245) qui leur sont attribués.

16. Système numérique de transmission OFDM à porteuses multiples selon la revendication 15, **caractérisé en ce qu'**un désentrelaceur de blocs est branché entre chaque dispositif de calcul de métrique (190, 195, 200) et chaque décodeur en mode replié (230, 232, 234) de même qu'un entrelaceur de blocs (210, 220) est branché entre chaque codeur en mode replié (240, 245) pour le recodage respectif du flux de bits de données trouvé et le dispositif de calcul de métrique (195, 200) correspondant en aval.

17. Emetteur numérique OFDM à porteuses multiples pour la mise en oeuvre dans un système numérique de transmission OFDM à porteuses multiples selon l'une des revendications 8 à 16 avec les caractéristiques suivantes :
au moins une série (30) d'au moins N codeurs de canal (32, 34, 36) branchés en parallèle dont le débit de codage est prédéfini, pour le codage chaque fois d'un flux de données partiel,
un système de transposition de symboles (40) qui est relié aux sorties des N codeurs de canal (32, 34, 36) branchés en parallèle, pour la représentation d'un N-tuple à N bits en un symbole complexe d'un alphabet de 2^{N} symboles PSK, un dispositif de formation de blocs (80) pour regrouper un nombre prédéfini de symboles complexes en un bloc,
un modulateur à porteuses multiples (100) pour la modulation des symboles complexes regroupés en un bloc, et
un dispositif (110) pour la production de signaux OFDM analogiques à partir des symboles complexes de chaque bloc et pour l'émission des signaux OFDM analogiques et
un entrelaceur de fréquences (90) branché entre le dispositif de formation de blocs (80) et le modulateur à porteuses multiples (100) pour imbriquer les symboles complexes de chaque bloc en fonction de la fréquence.

18. Emetteur numérique OFDM à porteuses multiples selon la revendication 17, **caractérisé par** un entrelaceur en fonction du temps (60) branché en aval d'un système de transposition de symboles (40) pour imbriquer les symboles complexes en fonction du temps.

19. Emetteur numérique OFDM à porteuses multiples selon la revendication 17 ou 18, **caractérisé en ce que** le modulateur à porteuses multiples (100) assure une modulation différentielle sur chaque sous-porteuse et **en ce que** chaque codeur de canal (32, 34, 36) est un codeur en mode replié.

20. Récepteur numérique OFDM à porteuses multiples pour la mise en oeuvre dans un système numérique de transmission OFDM à porteuses multiples selon l'une des revendications 8 à 16, **caractérisé par**
un démodulateur OFDM,
un démodulateur différentiel,
un désentrelaceur de fréquences,
un dispositif pour l'ouverture des blocs,
un démultiplexeur pour le démultiplexage en fonction du temps des symboles complexes de divers flux de données sources,
un désentrelaceur en fonction du temps,
N dispositifs de calcul de métriques (190, 195, 200) branchés en parallèle, en aval de chacun desquels est branché un décodeur séparé en mode replié (230, 232, 234),
les sorties du décodeur en mode replié (230, 232, 234) étant rétrocouplées, selon une règle sélectionnée de représentation des symboles, sur les dispositifs de calcul de métriques (190, 195, 200) correspondants à travers des codeurs en mode repliés complémentaires (240, 245) qui leur sont attribués.
